# EUROPÄISCHE PATENTSCHRIFT

(11) **EP 2 255 599 B1**
(45) Veröffentlichungstag und Bekanntmachung des Hinweises auf die Patenterteilung: **30.11.2011**
(21) Anmeldenummer: 09724206.9
(22) Anmeldetag: 18.03.2009
(51) Int. Cl.: H05B 37/02

(54) **BETRIEBSGERÄT FÜR LEUCHTMITTEL UND BELEUCHTUNGSSYSTEM**
OPERATING DEVICE FOR ILLUMINATING MEANS AND LIGHTING SYSTEM
APPAREIL PERMETTANT DE FAIRE FONCTIONNER UN MOYEN D'ÉCLAIRAGE, ET SYSTÈME D'ÉCLAIRAGE CORRESPONDANT

(30) Priorität: 25.03.2008 DE 102008015644; 07.04.2008 DE 102008017557
(43) Veröffentlichungstag der Anmeldung: 01.12.2010
(73) Patentinhaber: Tridonic GmbH & Co KG, 6851 Dornbirn (AT)
(72) Erfinder: BÖCKLE, Reinhard, A-6841 Mäder (AT)
(74) Vertreter: Rupp, Christian
(86) Internationale Anmeldenummer: PCT/EP2009/002007
(87) Internationale Veröffentlichungsnummer: WO 2009/118123

(56) Entgegenhaltungen:
- EP-A- 1 374 366
- DE-A1- 10 329 876
- CHIPCON PRODUCTS: "CC2430 A True System-on-Chip solution for 2.4 Ghz IEEE 802.15.4/ZigBee" 30. Mai 2007 (2007-05-30), TEXAS INSTRUMENTS , OSLO, NORWAY , XP002543676 in der Anmeldung erwähnt Seite 65 - Seite 66 Seite 143 - Seite 144

## Beschreibung

Die vorliegende Erfindung bezieht sich grundsätzlich auf Betriebsgeräte mit Leuchtmittel, welchen Betriebsmitteln über eine Schnittstelle externe Befehle zuführbar sind.

Die Erfindung bezieht sich auch auf ein Beleuchtungssystem mit derartigen Betriebsgeräten.

Aus der EP 1 374 366 B1 ist ein Betriebsgerät für eine Leuchtstofflampe in Form eines elektronischen Vorschaltgerätes (EVG) bekannt. Dieses weist einen an das Netz anzuschließenden Gleichrichter, sowie einen sich daran anschließenden steuerbaren Wechselrichter an, der die Leuchtstofflampe mit Hochspannung versorgt. Die von dem Wechselrichter abzugebende Leistung wird von einer Steuereinheit gesteuert. Die Steuereinheit wird ihrerseits von einer Prozessoreinheit (Integrierte Schaltung "IC") gesteuert, welche mit einer Niedervoltspannung betrieben wird. Im Normalbetrieb wird die Niedervoltspannung von dem Steuergerät erzeugt. Im Standby-Betrieb werden zum Zwecke der Energieeinsparung der Wechselrichter, das Steuergerät und eine zwischen den Gleichrichter und das Steuergerät geschaltete Korrekturschaltung abgeschaltet. Die Prozessoreinheit bleibt eingeschaltet und erhält die zum Betrieb erforderliche Niedervoltspannung über einen Widerstand, der mit dem Ausgang des Gleichrichters verbunden ist. Demnach benötigt die Prozessoreinheit im Standby-Betrieb weiterhin Energie. Die Prozessoreinheit ist über eine Schnittstelle mit einem Bus (analog oder digital) verbunden, so dass der integrierten Schaltung über die Schnittstelle externe Steuersignale zugeführt werden können, und zwar auch im Standby-Betrieb.

Ein ähnliches Betriebsgerät, wie vorstehend beschrieben, ist nach der EP 1 231 821 A1 bekannt. Im Gegensatz zu dem zuvor beschriebenen Betriebsgerät wird hier die Niedervoltspannungs-Versorgungseinheit im Standby-Betrieb nicht abgeschaltet, sondern weiterbetrieben, und zwar aus der vom Netzgleichrichter des EVG erzeugten gleichgerichteten Netzspannung. Die Niedervoltspannungs-Versorgungseinheit besteht aus einem Tiefsetzsteller und einem Festspannungsregler. Auch für dieses Betriebsgerät ist festzustellen, dass es im Standby-Zustand Energie verbraucht, wenn auch möglicherweise weniger als das eingangs beschriebene Betriebsgerät.

Aus der DE 103 29 876 A1 ist ein Betriebsgerät bekannt, das im Standby-Zustand vollständig abgeschaltet werden kann und keine Energie verbraucht. In einer zu dem Betriebsgerät gehörenden Schnittstelle, über welche externe Steuersignale zuführbar sind, weist eine Auswertelogik auf, die während des Standby-Betriebes in eine Art energielosen Schlafzustand versetzt wird. Wenn im Ruhezustand eines mit der Schnittstelle verbundenen Busses keine Spannung an den ausgangsseitigen Anschlüssen der Schnittstelle anliegt, ist die Auswertelogik so ausgeführt, dass sie unverzüglich bei einem Wechsel der Busleitung auf ein Hochpegel-Signal durch diese Spannung aktiviert wird ("wake-up"), wobei diese Aktivierung ausreichend schnell erfolgt, um eine sichere Erfassung des ersten Bits des eingehenden Digitalsignals zu gewährleisten. In der genannten Druckschrift findet sich jedoch kein Hinweis darauf, wie eine integrierte Schaltung mit Niedervoltspannung zu versorgen ist.

Zudem benötigt das Betriebsgerät eine Logik zum Empfangen, Speichern und Verarbeiten der eingehenden Digitalsignale, die auf der Anschlussseite der Schnittstelle angeordnet ist. Da die Schnittstelle potentialgetrennt ausgeführt sein muß, ist somit in dem Betriebsgerät zusätzlich zur eigentlichen Steuerschaltung eine zusätzliche Auswertelogik für die Schnittstelle notwendig. Weiterhin muß auch die Steuerschaltung und die Wandlerschaltung des Betriebsgerätes im Vergleich zu einem herkömmlichen dimmbaren Betriebsgerät erweitert werden.

Die Erfindung hat sich nunmehr zur Aufgabe gemacht, Betriebsgeräte für Leuchtmittel und mit einer Schnittstelle energieeffizienter auszugestalten.

Diese Aufgabe wird gelöst durch die Merkmale der unabhängigen Ansprüche. Die abhängigen Ansprüche bilden den zentralen Gedanken in vorteilhafter Weise weiter.

Die Erfindung schlägt in einem Aspekt vor ein Betriebsgerät für Leuchtmittel, aufweisend:
- eine Steuereinheit, die die Versorgung der Leuchtmittel mit elektrischer Energie steuert,
- wobei die Steuereinheit eine integrierte Steuerschaltung (bspw. ASIC, Mikroprozessor etc.) aufweist,
- eine Niedervolt-Einheit, die zumindest die integrierte Schaltung mit Niedervoltspannung versorgt, und
- eine zu der Steuereinheit separat ausgebildete Schnittstelle, über die der integrierten Steuerschaltung über eine Signalleitung (bspw. Busleitung) externe Steuersignale für den Betrieb der Leuchtmittel zuführbar sind,
wobei Schnittstelle dazu ausgebildet ist, in einer Anlaufphase der integrierten Schaltung elektrische Energie von der wenigstens einen Busleitung an die integrierte Schaltung weiterzuleiten.

Basierend auf einem System mit Niedervoltversorgung wie beim Stand der Technik erhält die Niedervolt-Einheit bei dem erfindungsgemäßen Betriebsgerät eine Anlaufenergie, die sie sofort in den Stand versetzt, die integrierte Schaltung mit Niedervoltspannung zu versorgen. Für das weitere Hochlaufen kann die Niedervolt-Einheit dann Energie über die Netzeingänge des Betriebsgeräts ziehen. Falls das Betriebsgerät vom Netz durch einen Schalter getrennt war, kann ein sofortiges Anschalten an das Netz veranlasst werden.

Die erfindungsgemäße Lösung gewährleistet, dass ein mit einer integrierten Schaltung und einer dazu notwendigen Niedervolt-Einheit versehenes Betriebsgerät ebenfalls im Standby-Betrieb ohne jede Energieaufnahme auskommen kann. Im Zustand des Standby-Betriebes schaltet das Betriebsgerät das Leuchtmittel ab, das Betriebsgerät kann aber weiterhin Steuersignale empfangen und verwerten.

Weiterhin kann es während des Hochlaufens bereits erforderlich sein, Daten über die Schnittstelle zu empfangen und ggf. zwischenzuspeichern. In weiterer Folge kann das Betriebsgerät dann komplett in Betrieb genommen werden.

Bei einem Ausschaltbefehl über die Schnittstelle kann die Prozessoreinheit den Wechselrichter um weitere Teile des Betriebsgeräts außer Betrieb setzen, und soweit möglich, auch Teile des Prozessors selbst deaktivieren bzw. in einen Niedrigenergie-Modus versetzen, um die Verluste soweit wie möglich zu senken und - sofern vorhanden - bei einer aufrechterhaltenen Versorgung aus einem Bus, insbesondere einem DALI-Bus, weiter aktiv bleiben zu können. Dabei kann das Betriebsgerät über einen Schalter komplett vom Netz getrennt werden.

Wenn keine weitere (dauerhafte) Versorgung über die Schnittstelle erfolgt, müssen sich die Niedervolt-Einheit und die integrierte Schaltung in einen Zustand versetzen, der bei Übertragen eines Anlaufimpulses das Hochlaufen wieder ermöglicht.

Eine zweckmäßige Ausgestaltung des erfindungsgemäßen Betriebsgerätes kann darin bestehen, dass eine mit der Schnittstelle verbundene oder in diese integrierte Anlaufschaltung vorgesehen ist, der die externe Energie zugeführt wird und die daraus eine Niedervoltspannung generiert, welche der integrierten Schaltung während der Anlaufphase der Niedervolt-Einheit zugeführt wird.

Dazu können dem oder einem Eingang der Schnittstelle Impulse geführt werden, wobei die Anlaufschaltung ein reaktives Bauelement, vorzugsweise in Form eines Transformators oder eines Kondensators aufweist, welches es erlaubt, die mit den Impulsen übertragene Energie aufzunehmen und zur Umwandlung in eine Niedervoltspannung weiter zu verarbeiten. Der Transformator kann auch als integriertes Bauteil ausgeführt sein, beispielsweise als Transformator mit Luftspule (sogenannter ,coreless transformer'). Es kann aber ein anderes Bauteil, welches zu einer potentialgetrennten Energieübertragung fähig ist, eingesetzt werden, beispielsweise ein Optokoppler mit Fotovoltaik-Zelle (beispielsweise ein Fotovoltaik-Treiber).

Die Schnittstelle kann zur Aufnahme von Impulsen aus einem Bus mit diesem verbunden werden. Die Schnittstelle bzw. die Anlaufschaltung muss so ausgelegt sein, dass sie über den Bus Signale aufnehmen kann, und ferner, dass sie vor den Steuerimpulsen gesendete Weckimpulse aufnehmen kann.

Ferner sollte die Schnittstelle bzw. die Anlaufschaltung so ausgebildet sein, dass als Impulsblock übertragene Weckimpulse aufgenommen werden können, wobei die einzelnen Impulse eine Impulsbreite zwischen 1 und 200µsec, vorzugsweise zwischen 5 und 20µsec haben, und wobei die Impulsblock-Länge zwischen 1 und 100 Millisekunden, vorzugsweise zwischen 10 und 20 Millisekunden liegt.

Eine zweckmäßige Weiterbildung kann ferner darin bestehen, dass das Betriebsgerät so ausgelegt ist, dass es selbständig feststellt, ob es mit einem Dimm-Befehl ausgeschaltet wurde, damit es nach einem Aufwecken auf den nächsten Dimm-Befehl für einen Start wartet und nicht einen normalen Start ausführt.

Weiterhin sollte das Betriebsgerät so ausgelegt sein, dass es - falls es zuletzt nur eine Impulsfolge zur Energieversorgung empfangen hat - der Dimm-Befehl aber ausbleibt, wieder in den Ausschalt-Zustand zurückschaltet.

Eine andere Weiterbildung besteht darin, dass das Betriebsgerät so ausgelegt wird, dass es den Empfang der Energie-Impulse registriert, um dann den nächsten Dimm-Befehl abzuwarten.

Die vorstehend genannten Funktionen sollten von einem Benutzer des Betriebsgerätes wahlweise ein- und ausschaltbar sein.

Ein anderer Weiterbildungsaspekt ist der, dass die Schnittstelle dazu ausgebildet ist, neben Niedervoltsignalen, wie sie für einen Bus typisch sind, auch Signale zu verarbeiten, die ausgehend von einem manuell betätigbaren Taster oder Schalter erzeugt sind, wobei der Taster oder Schalter bspw. mit Netzspannung versorgt ist. Diese Schnittstellenausgestaltung wird im folgenden als "Taster-Dimm" bezeichnet.

Die von dem Taster oder Schalter erzeugten Signale können von der Anlaufschaltung gleichgerichtet und geglättet sowie hinsichtlich Ihrer Spannung reduziert werden, so dass sie direkt, d.h. ohne galvanische Trennung, der Niedervolt-Einheit als Anlaufspannung zugeführt werden.

Alternativ dazu können die aus Netzwellen bestehenden Taster- oder Schaltersignale von der Anlaufschaltung gleichgerichtet und so in Halbwellen umgewandelt werden. Bei dieser Variante enthält die Anlaufschaltung einen Taktgenerator, dem über eine Torschaltung die oberhalb einer Schwellspannung liegenden Anteile der Netzhalbwellen zugeführt werden. Der Taktgenerator gibt selbständig eine Impuls-Folge ab, solange ihm die Torschaltung eine Spannung zuführt. Ferner enthält die Anlaufschaltung bei dieser Variante eine auf die Gleichrichterschaltung folgende Strombegrenzerschaltung, einen von dem Taktgenerator getakteten Schalter und einen diesem nachfolgenden Transformator. An die Ausgangsseite des Transformators schließen sich eine weitere Gleichrichterschaltung mit Glättungselement und einem Strombegrenzer an, die die von dem Transformator übertragenen Impulse zu der Anlaufspannung für die Niedervolt-Einheit verarbeiten. Der Taktgenerator kann beispielsweise ein Multivibrator sein. Die Schwellspannung der Torschaltung sollte zwischen 120 und 200 Volt, vorzugsweise zwischen 150 und 180 Volt liegen. Die Impulsbreite der von dem Taktgenerator erzeugten Impulse sollte zwischen 1 und 400µsec liegen, vorzugsweise zwischen 5 und 20µsec liegen.

Eine andere Weiterbildung der Erfindung kann darin bestehen, dass ein Start-Schaltungsteil vorgesehen ist, der nach einem Standby-Zustand ohne Energie-Aufnahme einerseits einen Netzstart und andererseits einen Start zulässt, der durch über die Schnittstelle zugeführte externe Energie initiiert wird.

Der Startschaltungsteil kann einen Schalter zum Ein- und Ausschalten der Niedervolt-Einheit aufweisen und von dem Prozessor gesteuert sein, derart, dass die integrierte Schaltung den Schalter beim Eingang eines externen Ausschaltbefehls über die Schnittstelle öffnet und die Niedervolt-Einheit auf Energieaufnahme Null stellt, und den Schalter eines externen Energie-Signals wieder schließt, so dass die Niedervolt-Einheit wieder anlaufe kann.

Eine weitere Ausgestaltung des Startschaltungsteils kann darin bestehen, dass diese einen ersten Transistor und eine Serienschaltung aus einem Ladekondensator und einem Ladewiderstand enthält, wobei die Serienschaltung über die Emitter-Basis-Strecke des ersten zunächst noch nicht durchgeschalteten Transistors mit einem Ausgang des Netzgleichrichters vorliegenden Zwischenkreis-Spannung verbunden ist und der Ladestrom den Anlauf der Niederstrom-Einheit initiiert, und dass ein weiter Transistor vorgesehen ist, der den Ladevorgang des Ladekondensators abbricht und den ersten Transistor durchschaltet, wenn am Ausgang der Niedervolt-Einheit eine Niedervolt-Spannung auftritt.

Ein weiterer Aspekt der Erfindung bezieht sich auf ein Betriebsgerät für Leuchtmittel, aufweisend:
- eine Steuereinheit, die die Versorgung der Leuchtmittel mit elektrischer Energie steuert, wobei die Steuereinheit eine integrierte Steuerschaltung (9) aufweist,
- eine abschaltbare Niedervolt-Einheit, die zumindest die integrierte Schaltung mit Niedervoltspannung versorgt,
- eine Schnittstelle, über die der integrierten Steuerschaltung über eine Datenleitung Steuersignale für den Betrieb der Leuchtmittel zuführbar sind, und
- eine Aufweckschaltung, der an einem Aufweckeingang ein Signal von der Signalleitung zuführbar ist, und die dazu ausgebildet ist, bei Eingang eines Aufwecksignals an dem Aufweckeingang die Niedervolt-Einheit einzuschalten.

Das Betriebsgerät kann dabei eine PFC-Schaltung aufweisen, die eine Zwischenkreisspannung erzeugt,
wobei die Niedervolt-Einheit durch die Aufweckschaltung einschaltbar ist, indem sie mit der Zwischenkreisspannung verbunden wird.

Der Aufweckeingang der Aufweckschaltung kann mit der Signalleitung über eine galvanische Trennung, vorzugsweise ein Transformator oder ein Optokoppler, verbunden sein.

Die integrierte Schaltung kann mit einer separaten galvanischen Trennung oder der gleichen galvanischen Trennung wie die Aufweckschaltung mit der Signalleitung verbunden sein.

Die Aufweckschaltung kann ausgehend von der Signalleitung oder über eine durch eine Versorgungsspannung gespeiste Anlaufschaltung mit Energie versorgt sein.

Das Aufwecksignal kann eine Pegeländerung der Signalleitung, bspw. eine fallende Flanke des DALI-Standards sein.

Die Aufweckschaltung kann einen Abschalteingang aufweisen, wobei die Aufweckschaltung durch ein Abschaltsignal an diesem Abschalteingang die Niedervolt-Einheit in einen Ruhezustand übergeht, in dem sie weiterhin ihren Aufweckeingang überwacht.

Das Abschaltsignal für die Aufweckschaltung wird vorzugsweise erzeugt, wenn die zugeordneten Leuchtmittel abgeschaltet werden.

Das Abschaltsignal kann bspw. erzeugt werden, sobald die integrierte Schaltung eine PFC-Schaltung abschaltet.

Die Erfindung bezieht sich auch auf eine Leuchte, aufweisend ein Leuchtmittel, vorzugsweise eine Gasentladungslampe, eine LED oder eine OLED, sowie ein Betriebsgerät der oben erläuterten Art.

Schliesslich bezieht sich die Erfindung auch auf ein Beleuchtungssystem, aufweisend mehrere Leuchten, darunter wenigstens eine der oben genannten Art, wobei die Leuchten vorzugsweise mittels eines Bussystems untereinander und/oder mit einer zentralen Steuereinheit verbunden sind.

Die Schnittstelle beziehungsweise Anlaufschaltung zur Signalübertragung an den IC kann über ein nichtgalvanisches Koppelelement mit dem IC verbunden sein.

Das nicht-galvanische Koppelelement kann von einem das reaktive Bauelement bildenden Transformator oder einem potentialgetrennten Koppelglied gebildet sein.

Ausführungsbeispiele der Erfindung werden nachfolgend anhand der Zeichnungen beschrieben.

Es zeigen:
Fig. 1 ein Blockschaltbild des erfindungsgemäßen Betriebsgerätes;
Fig. 2 eine erste Schnittstelle mit Anlaufschaltung für Taster-Dimmsignale;
Fig. 3 eine Schnittstelle mit Anlaufschaltung für mit einem Bus übertragene Impulssignale;
Fig. 4 ein Impulsdiagramm mit einem Anlaufenergie-Impulspaket;
Fig. 5 eine Schnittstelle mit Anlaufschaltung für Taster-Dimmsignale, die in Impulssignale umgewandelt werden;
Fig. 6 ein Impulsdiagramm von aus Taster-Dimmsignalen umgewandelten Impulsen;
Fig. 7 einen Teil des Betriebsgerätes mit einer ersten Ausführungsform eines Start-Schaltungsteiles;
Fig. 8 einen Teil des Betriebsgerätes mit einer zweiten Ausführungsform des Start-Schaltungsteiles, und
Fig. 9 einen Teil des Betriebsgerätes mit einer weiteren Ausführungsform des Start-Schaltungsteiles.

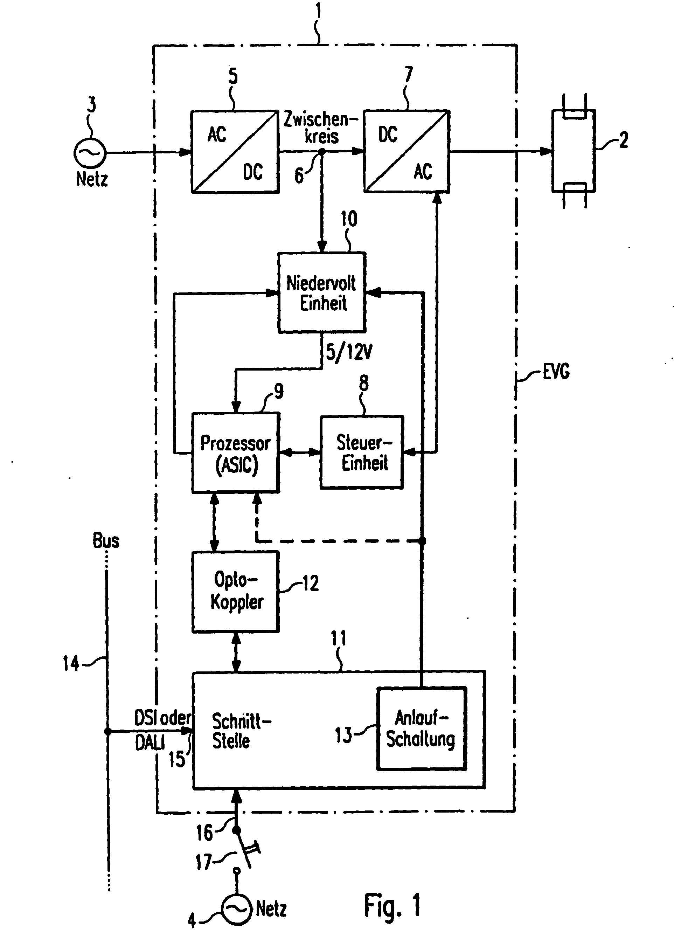

Das in Fig. 1 gezeigte Betriebsgerät 1 ist ein elektronisches Vorschaltgerät (EVG) zum Betreiben einer Niedervolt-Gasentladungslampe 2. Vom Netz 3 wird Netzspannung in einem AC/DC-Block gleichgerichtet und in einem Zwischenkreis 6 gespeichert. Die Zwischenkreisspannung wird dann in einem DC/AC-Block 7 in eine hochfrequente Wechselspannung umgewandelt, die zum Betrieb der Gasentladungslampe 2 verwendet wird. Die Leistungssteuerung des Wechselrichters 7 erfolgt durch eine Steuereinheit 8. Die Steuereinheit 8 wird ihrerseits von einer integrierten Schaltung 9 gesteuert, die über ein potentialgetrenntes Koppelglied 12 (Optokoppler oder anderes potentialgetrenntes Übertragungsglied) mit einer Schnittstelle 11 verbunden ist. Die integrierte Schaltung 9 ist bspw. als ASIC, Mikrokontroller oder einer Hybridversion ausgeführt und muss mit einer Niedervoltspannung versorgt werden, die von einer Niedervolt-Einheit 10 geliefert wird. Die Niedervoltspannung liegt bei 5 bis 12V. Im normalen Betrieb bezieht die Niedervolt-Einheit ihre Betriebsenergie vom Zwischenkreis 6.

Die integrierte Schaltung 9 steuert die Niedervolt-Einheit 10. Sie steht auch mit der Steuereinheit 8 im Informationsaustausch indem sie Steuersignale an die Steuereinheit 8 übermittelt und Informationen von der Steuereinheit empfängt. Die Steuereinheit 8 kann auch in die integrierte Schaltung 9 integriert sein.

Die Schnittsstelle 11 dient zum Empfang von externen Steuersignalen, die der Schnittstelle 11 entweder über einen Bus 14 (bspw. DSI oder DALI) am Eingang 15 zugeführt werden. Die integrierte Schaltung 9 gibt aber auch über das potentialgetrennte Koppelglied 12 Istwert-Signale an die Schnittstelle 11 ab, die diese Signale wiederum an den Bus 14 überträgt, der sie an eine Zentrale weiterleitet. Die Schnittstelle 11 hat einen weiteren Eingang 16, der zur Zuführung von Taster-Dimmsignalen dient. Diese werden dadurch erzeugt, dass ein Taster 17 den Eingang 16 taktweise oder über längere Phasen mit dem Netz 4 verbindet bzw. den Eingang 16 kurzschließt. Die Schnittstelle 11 kann auch als eine gemeinsame Schnittstelle sowohl für Signale eines Busses 14 (bspw. DSI oder DALI) als auch für Taster-Dimmsignale ausgelegt sein.

Ziel der Erfindung ist es, den Energieverbrauch des Betriebsgerätes so gering wie möglich zu halten. Dazu ist vorgesehen, dass im Standby-Betrieb der DC/AC-Wandler 7, der normalerweise als PFC-Schaltung ausgebildete Zwischenkreis 6, die Steuereinheit 8, die integrierte Schaltung 9 und die Niedervolt-Einheit 10 völlig oder zumindest teilweise abgeschaltet werden. Damit befindet sich das Betriebsgerät in einem Zustand, in dem es null Energie aufnimmt. Die integrierte Schaltung 9 selbst kann alternativ zu seiner kompletten Abschaltung aber auch nur einzelne Funktionsblöcke abschalten oder zumindest mit reduzierter Funktionalität betreiben und somit seinen Energieverbrauch minimieren.

Um - ausgehend von Standby-Betrieb - trotz des energielosen Zustandes ein Anlaufen des Betriebsgeräts zu gewährleisten, können der Schnittstelle externe Energiesignale zugeführt werden. Dies können beispielsweise - wie später noch genauer beschrieben wird - Weckimpulse sein, die der Schnittstelle über den Bus-Eingang 15 zugeführt werden oder aber Taster-Dimmsignale, die der Schnittstelle über den Eingang 16 zugeführt werden. Die so der Schnittstelle zugeführte externe Energie wird in einer Anlaufschaltung 13 zu einer Niederspannung verarbeitet, die der Niedervolt-Einheit 10. zugeführt wird. Die Niedervolt-Einheit 10 wird dadurch in die Lage versetzt, den IC 9 unverzüglich die erforderliche Niedervolt-Spannung von 5 bzw. 12V zur Verfügung zu stellen. Außerdem wird dadurch bewirkt, dass die Niedervolt-Einheit weitere Energie aus dem Zwischenkreis aufnimmt und hochlaufen kann. Sofern der Zwischenkreis 6 - wie vorher erwähnt - als aktive PFC-Schaltung ausgeführt ist, kann die Energie zum Hochlaufen der Niedervolt-Einheit 10 am Ausgang des AC/DC-Wandlers 5 ausgekoppelt werden. Da die Auskopplung über eine Kapazität erfolgen kann, benötigt diese Anlaufschaltung im Standby-Betrieb selbst keine Betriebsenergie.

Da der IC 9 durch die Anlaufenergie sofort betriebsbereit ist, kann er das Einschalten der zuvor ausgeschalteten Schaltungsblöcke des Betriebsgerätes veranlassen und außerdem Steuersignale von der Schnittstelle 11 aufnehmen bzw. Signale an die Schnittstelle 11 abgeben. Für den Fall, dass der IC 9 in der Anlaufphase Steuersignale empfängt und diese noch nicht an die Steuereinheit 8 weitergeben kann, weil letztere nicht betriebsbereit ist, kann der IC 9 die empfangenen Steuersignale zwischenspeichern bis er sie an die Steuereinheit 8 abgeben kann, wenn diese funktionsbereit ist.

Alternativ zu der in dicken Linien in Fig. 1 dargestellten Möglichkeit, dass die Anlaufschaltung die von ihr erzeugte Niedervolt-Spannung der Niedervolt-Einheit 10 zuführt, besteht noch die in gestrichelten Linien angedeutete Möglichkeit, dass die von der Anlaufschaltung 13 erzeugte Niedervolt-Spannung direkt dem IC 9 zugeführt wird, bis die Niedervolt-Einheit 10 hochläuft oder hochgelaufen ist.

Vorteilhafterweise wird die Niedervolt-Spannung von der Anlaufschaltung 13 oder der Schnittstelle 11 über eine potentialgetrennte Übertragung auf den IC 9 oder die Niedervolt-Einheit 10 übertragen. Es ist aber auch eine Übertragung an andere Punkte in dem Betriebsgerät möglich, sofern sich diese Punkte zur Einspeisung einer Anlaufenergie eignen.

In Fig. 1 ist dargestellt, dass die Anlaufschaltung 13 Teil der Schnittstelle 11 ist. Dies ist jedoch nicht zwingend. Die Anlaufschaltung kann auch außerhalb der Schnittstelle 11 positioniert sein oder sogar in den ASIC integriert sein, der auch den IC 9 repräsentiert. Wichtig ist, dass die externe Energie der Anlaufschaltung 13 zugeführt wird und dass die Anlaufschaltung 13 diese Energie in eine Niedervolt-Spannung umwandelt, welche den Ablauf des gesamten Betriebsgerätes ermöglicht, nachdem letzteres im Standby-Betrieb in einem völlig energielosen Zustand verharrt hat.

In der folgenden Beschreibung ist die Anlaufschaltung 13 der Einfachheit halber stets als Teil der Schnittstelle beschrieben. Dies muss jedoch - wie vorstehend erwähnt - nicht zwingend so sein.

Die Verbindung der Schnittstelle 11 zum IC 9 und zur Steuereinheit 8 über das potentialgetrennte Koppelglied 12 kann auch zur Übertragung der Energie von der Anlaufschaltung 13 auf die Niedervolt-Einheit 10 oder den IC 9 genutzt werden.

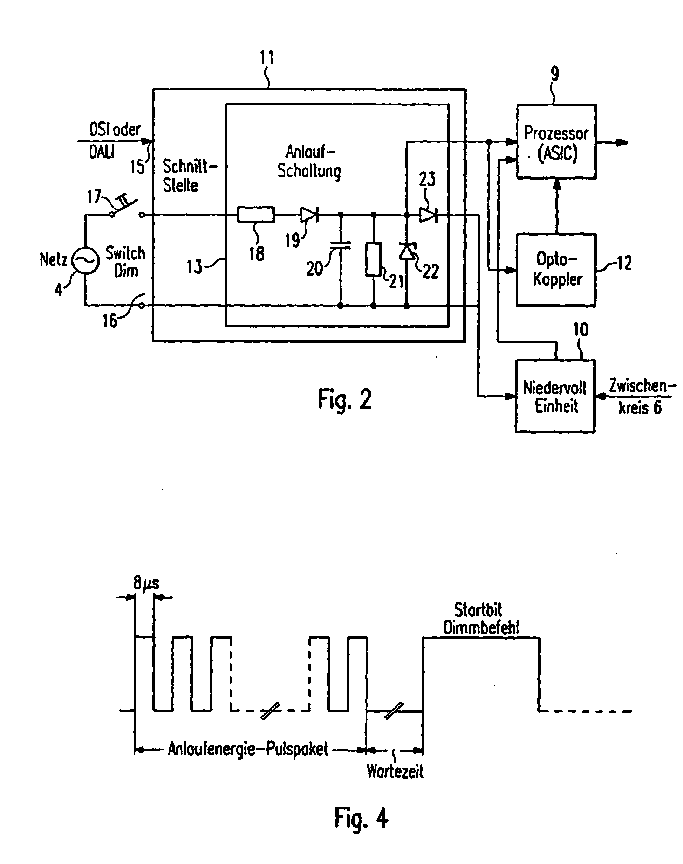

Die in Fig. 2 gezeigte Schnittstelle repräsentiert den Fall, dass dem Betriebsgerät externe Energie in Form von Taster-Dimmsignalen zugeführt wird, in dem der Taster 17 nach einem bestimmten Muster oder dauerhaft gedrückt wird, so dass der Schnittstelle 11 in entsprechender Weise Netzspannung zugeführt wird. Die Netzspannung wird in der Anlaufschaltung 13 über der Vorwiderstand 18, die Gleichrichter-Diode 19 gleichgerichtet und durch die Kombination aus dem Kondensator 20 und dem Widerstand 21 geglättet. Die so erzeugte mehr oder weniger stark pulsierende Gleichspannung wird in ihrer Höhe durch eine Zenerdiode 22 begrenzt und über eine weitere Diode 23 ohne galvanische Trennung der Niedervolt-Einheit 10 zugeführt. Daneben wird die erzeugte Niedervolt-Spannung noch vor der Diode 23 direkt dem IC 9 zugeführt, der die Niedervolt-Spannung als Anlaufenergie verwendet, bis die Niedervolt-Einheit entsprechend hochgelaufen ist und ihrerseits die Niedervolt-Spannung an den IC 9 liefern kann. Wie oben beschrieben, kann der IC 9 die Niedervolt-Einheit 10 für den Standby-Betrieb ausschalten, so dass sie keine Energie mehr aufnimmt. Nach Beendigung des Standby-Zustandes kann der IC 9 mit der ihm zugeführten Anlaufenergie die Niedervolt-Einheit dann wieder einschalten.

Der Steuersignaleingang des ICs 9 ist mit dem potentialgetrennten Koppelglied 2 verbunden, der seinerseits durch die Tastdauer charakterisierte Steuersignale am Ausgang der Anlaufschaltung erkennt und an den IC 9 weiterleitet.

Es ist aber auch möglich, dass die integrierte Schaltung mögliche Steuerinformationen direkt aus der im zugeführten Niedervoltspannung herausfiltert, so dass der Umweg über das potentialgetrennte Koppelglied 12 gegebenenfalls entbehrlich ist.

Die Schnittstelle 11 beziehungsweise Anlaufschaltung 13 zur Signalübertragung an den IC 9 kann über ein nichtgalvanisches Koppelelement mit dem IC 9 verbunden sein.

Das nicht-galvanische Koppelelement kann sowohl durch eine direkte Verbindung der Niedervolt-Einheit 10 mit der Schnittstelle 11 beziehungsweise Anlaufschaltung 13 oder über einen ohmschen Widerstand erfolgen, sie kann aber auch von einem das reaktive Bauelement bildenden Transformator oder einem potentialgetrennten Koppelglied gebildet sein.

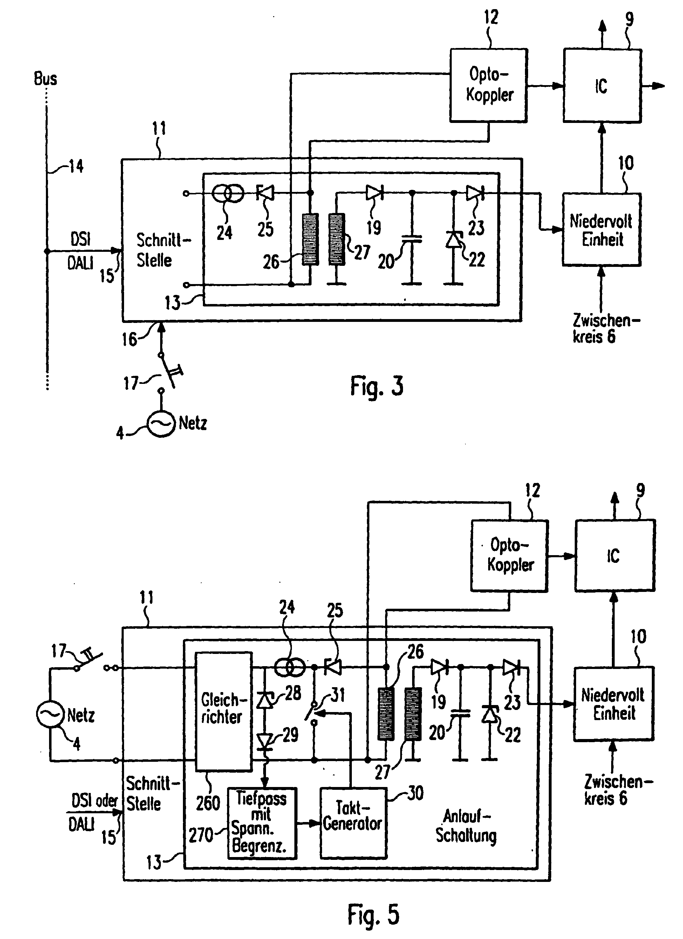

Die in Fig. 3 gezeigte Schnittstelle ist zum Empfang von Impulssignalen ausgelegt, die über den Bus 14 an den Eingang 15 der Schnittstelle 11 angeliefert werden. Es können dies DSI-Signale oder DALI-Signale sein. Außer den Steuersignalen können mit dem Bus jedoch auch Energiesignale an die Schnittstelle 11 geliefert werden, wie dies beispielsweise in Fig. 4 gezeigt ist. Hier ist einem einen Dimm-Befehl repräsentierenden Startbit eine Mehrzahl von kurzen Impulsen als Anlaufenergie-Impulspaket zeitlich vorangestellt, wobei zwischen dem Ende des Impulspaketes und dem Startbit noch eine bestimmte Wartezeit eingeschaltet ist. Die Impulse des Anlaufenergie-Impulspakets haben eine Impulsbreite von 8µsec (16µsec Periodendauer) und der Impulsblock hat eine Länge von 10 bis 20 Millisekunden. Das ist für eine erste Energieversorgung ausreichend, bis die Niedervolt-Einheit 10 hochgefahren ist. Dann kann der eigentliche Dimm-Befehl gesendet werden. Da eine solche Impulsfolge außerhalb eines gültigen Befehlsschemas liegt, wird sie als Störung ausgeblendet, wenn das Betriebsgerät sich nicht im Standby-Zustand befindet.

Die in Fig. 3 gezeigte Schnittstelle 11 und die darin enthaltene Anlaufschaltung 13 enthalten als wesentliches Bauteil ein reaktives Bauelement in Form eines Transformators 26, 27, mit dem die von dem Bus angelieferte Impuls-Energie ausgenommen und weitergeleitet werden kann. Statt eines Transformators kann auch ein Kondensator vorgesehen werden. Bevor die aufgenommenen Impulse den Transformator 26, 27 passieren, werden sie hinsichtlich ihrer Spannungsamplitude durch eine Konstantstromquelle 24 und eine Zehner-Diode 25 begrenzt. Die am Ausgang des Transformators 26, 27 auftretende Wechselspannung wird durch einen Gleichrichter 19 gleichgerichtet und durch einen Kondensator 20 geglättet. Nach einer weiteren Spannungsbegrenzung durch eine Zehner-Diode 21 wird die so erzeugte Niedervolt-Gleichspannung als Anlaufenergie über eine Diode 23 an die Niedervolteinheit 10 und/oder an den IC 9 geliefert. Der Einfachheit halber ist in Fig. 3 nur die erste Möglichkeit angedeutet. Diese Vereinfachung wird in den weiteren Darstellungen beibehalten, obwohl stets die Alternative zur Verfügung steht, dass die Niedervolt-Anlaufspannung alternativ oder gleichzeitig auch an den IC 9 geliefert wird.

An dieser Stelle sei bemerkt, dass ein normales DSI- oder DALI-Signal wesentlich längere Bitzeiten hat als die Impulse des in Fig. 4 gezeigten Anlaufenergie-Impulspaketes. Die wesentlich kürzeren Impulsbreiten der Weckimpulse des Anlaufenergie-Impulspaketes ermöglichen es, das reaktive Bauelement (Trafo oder Kondensator) für die in Fig. 3 gezeigte Anlaufschaltung 13 relativ klein zu halten. Grundsätzlich können Anlaufenergie-Impulspakete mit kurzer Impulsbreite, wie zum Beispiel 8 Mikrosekunden aber durchaus im Rahmen des DSI- oder DALI-Schemas übertragen werden.

Der Transformator 26, 27 kann auch als integriertes Bauteil ausgeführt sein, beispielsweise als Transformator mit Luftspule (sogenannter ,coreless transformer').

Das Betriebsgerät sollte so ausgelegt sein, dass es sich merken kann, ob es mit einem Dimm-Befehl ausgeschaltet wurde, damit es nach einem Aufwecken auf den nächsten Dimm-Befehl für einen Start wartet und nicht einen normalen Netzstart ausführt. So könnte das Betriebsgerät auch - falls nur eine Impulsfolge zur Energieversorgung gesendet wurde, der Dimm-Befehl aber ausbleibt - wieder selbsttätig in den ausgeschalteten Zustand zurückgehen. Eine andere Möglichkeit ist, dass der Empfang der EnergieImpuls registriert wird, um auf den nächsten Befehl zu warten.

Da die beschriebenen Eigenschaften besonders im Falle von DALI ein proprietäres System kennzeichnen, kann dem Kunden die Möglichkeit geboten werden, mit einem erweitertem elektronischen Steuerbefehl zu wählen, ob er dieses System aktivieren will oder nicht. Selbstverständlich ist auch bei DSI ein solcher elektronischer erweiterter DSI-Steuerbefehl möglich.

Während bei den illustrierten Ausführungsformen von Figur 3 und 5 die integrierte Schaltung 9 und die Anlaufschaltung durch separate galvanische Trennungen mit der Busleitung verbunden sind, ist es auch möglich, eine einzige galvanische Trennung zu verwenden. Bspw. kann die Signalleitung zu dem IC 9 ebenfalls mit der Sekundärseite des Transformators 26, 27 gekoppelt sein, der auch die die von der Busleitung entnommenen Energie der Anlaufschaltung zuführt.

Die Sekundärseite des Transformators 26, 26 kann im Übrigen auch eine Aufweckschaltung (bspw. in Form eines Kleincontrollers) mit Energie versorgen, der die Neidervolt-Einheit einschaltet, in der er sie bspw. mit der Zwischenkreisspannung verbindet.

Fig. 5 zeigt eine Schnittstelle 11 mit einer Anlaufschaltung 13, die wiederum zum Empfang von Taster-Dimm-Signalen ausgelegt ist. Die Anlaufschaltung enthält einen Gleichrichter 26, an dessen Ausgang Netzhalbwellen auftreten, die über eine Konstantstromquelle 24 und eine Zehner-Diode 25 hinsichtlich ihrer Spannungsamplitude begrenzt werden. Die Netzhalbwellen werden über eine weitere Zehner-Diode 28 und eine Diode 29 einem Tiefpass mit Spannungsbegrenzung 27 zugeführt, welcher einen Taktgenerator 30 steuert. Der Taktgenerator ist beispielsweise ein Multivibrator, der selbständig Taktimpulse für einen Schalter 31 liefert. Der Schalter ist quer zum Ausgang der Gleichrichterschaltung 26 geschaltet und zerlegt somit die Netzhalbwellen in eine Vielzahl von einzelnen Impulsen. Diese Impulse werden einem Transformator 26, 27 zugeführt, der eine galvanische Trennung bewirkt. Die am Ausgang des Transformators auftretenden Spannungsimpulse werden durch einen Gleichrichter 19 gleichgerichtet und einen Kondensator 20 geglättet. Ferner wird die gleichgerichtete und geglättete Spannung in ihrer Höhe durch eine Zehner-Diode 21 begrenzt und in eine Niedervolt-Anlaufspannung umgewandelt, die über eine Diode 23 der Niedervolteinheit 10 und/oder dem Prozessor 9 zugeführt wird.

Der Taktgenerator kann bei Anliegen eines Signals am Schnittstelleneingang als selbstschwingender Taktgenerator anlaufen und somit über den Transformator 26, 27 Energie übertragen. Bei einem dauerhaften Anliegen einer Spannung oder eines Signales an dem Schnittstelleneingang kann somit auch eine andauernde Energieübertragung erfolgen. Diese selbstständige Übertragung von Energie ist sowohl für Signale von einem Bus (bspw. DALI oder DSI) als auch für Taster-Dimm Signale möglich. Der Taktgenerator kann auch als Schaltregler IC ausgebildet sein.

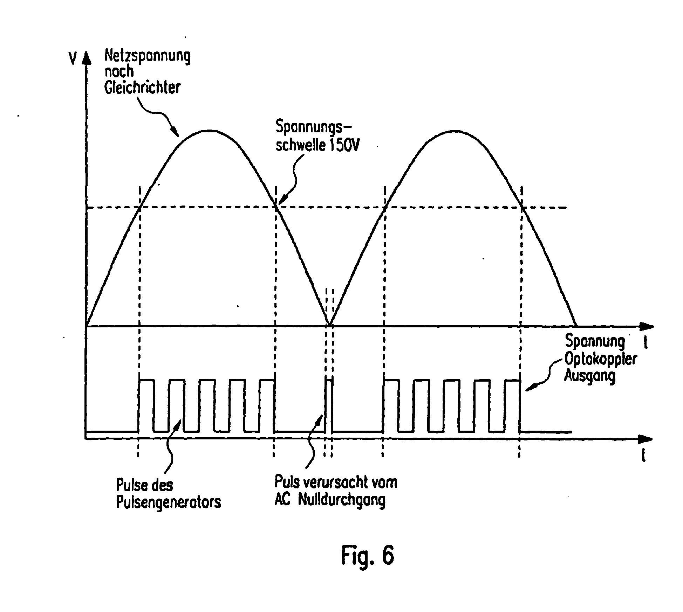

In Fig. 6 ist die Funktion der Anlaufschaltung nach Fig. 5 durch entsprechenden Impulsdiagramme genauer dargestellt. Man erkennt, dass der Taktgenerator 30 in Betrieb gesetzt wird, sobald die am Ausgang des Gleichrichters 26 auftretenden Netzhalbwellen eine Spannung von mehr als 150 Volt haben. Die Zehner-Diode 28, die Diode 29 und der Tiefpass 27 mit Spannungsbegrenzung bilden eine entsprechende Torschaltung, die den Taktgenerator 30 steuert. Die von dem Taktgenerator 30 abgegebenen Impulse öffnen und schließen den Schalter 31, so dass ein entsprechendes Impulsschema auch am Eingang des Transformators 26, 27 anliegt, wobei die Höhe dieser Impulsspannung - wie erwähnt - begrenzt ist.

Werden der in Fig. 5 gezeigten Schnittstelle keine Taster-Dimm-Signale, sondern DSI- oder DALI-Signale zugeführt, so handelt es sich dabei auch um Impulse. Diese müssen dann als Steuersignale ausgekoppelt und dem IC 9 über das potentialgetrennte Koppelglied 12 zugeführt werden. Es nun erforderlich, dass unterschieden werden kann, ob die von dem potentialgetrennten Koppelglied aufgenommenen und übertragenen Impulse bei Taster-Dimm-Betrieb von dem Taktgenerator 30 stammen oder ob es sich um externe Steuersignale handelt, die nach dem DSI- oder DALI-Schema vom Bus 14 angeliefert wurden. Wenn - wie in Fig. 5 dargestellt - die Anlaufschaltung einen Transformator 26, 27 enthält (was aber nicht zwingend notwendig ist), so kann als Unterscheidung der in seiner Breite verkürzte Impuls herangezogen werden, der in Fig. 6 in der Mitte dargestellt ist. Er tritt nur bei Taster-Dimm-Betrieb auf, und zwar dann, wenn die Netzspannung Nulldurchgang hat. Wenn die Anlaufschaltung keinen Transformator enthält, so kann als Kriterium für das Vorliegen von Taster-Dimm (und nicht von Bus-Impulsen) die Tatsache herangezogen werden, dass der gesamte Spannungsbereich oberhalb der Spannung der Zehner-Diode 28 auf Netzspannungs-Niveau liegt.

Die Schaltung nach Fig. 5 hat außerdem den Vorteil, dass sie bei Taster-Dimm-Betrieb sehr störsicher ist, da Störungen auf der Netzleitung in ihrer Höhe von der Zehner-Diodenspannung begrenzt werden und kurze Impulse nicht zum Takten des Multivibrators führen.

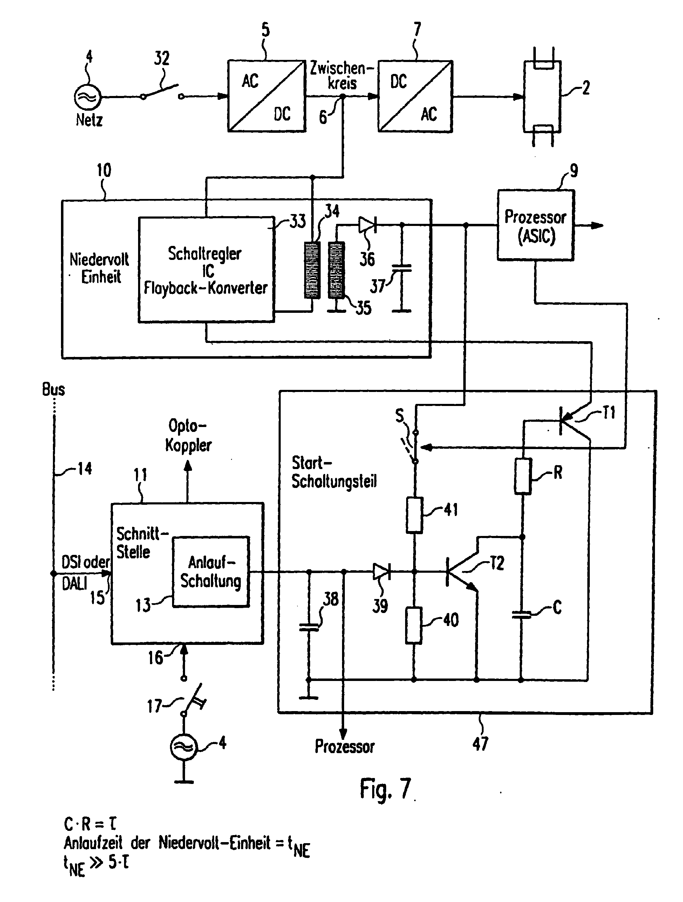

Die Schaltung nach Fig. 7 stellt einen Teil des Betriebsgerätes dar. Wesentlich ist hier der Start-Schaltungsteil 47. Seine Funktion ist, das Betriebsgerät aus einem ausgeschalteten Zustand wieder zu starten, wobei einerseits ein Netzstart möglich sein muss und andererseits ein Start mittels externer Energie, die dem Betriebsgerät über die Schnittstelle 11 zugeführt wird. Die Niedervolt-Einheit 10 enthält hier einen Schaltregler in Form eines Flyback-Konverters. Zu dem Konverter gehört die Primärwicklung 34 eines Übertragers 34, 35. Der Schalter des Flyback-Konverters ist Teil eines Schaltregler-ICs 33. Die von dem Schaltregler-IC 33 erzeugte Wechselspannung wird auf der Sekundärseite des Transformators 34, 35 durch eine Diode 36 gleichgerichtet und einen Kondensator 37 geglättet. Auf diese Weise wird eine Niedervoltspannung erzeugt, die der IC 9 für seinen Betrieb braucht.

Zur Erklärung der Funktion des Start-Schaltungsteiles 47 soll zunächst erklärt werden, wie ein Netzstart erfolgt. Dazu sei vorausgesetzt, dass ein zwischen dem Netz 4 und dem AC/DC-Wandler 5 eingefügter Netzschalter 32 offen ist. Ferner sei der Schalter S in dem Start-Schaltungsteil 47 geschlossen, der Kondensator C sei entladen und die beiden Transistoren T1, T2 seien stromlos. Wenn nun der Netzschalter 32 geschlossen wird, so baut sich am Ausgang des AC/DC-Wandlers eine Zwischenkreisspannung am Schaltungspunkt 6 auf. Der Schaltregler-IC 33 liegt mit seinem heißen Ende am Zwischenkreis 6 und mit seinem kalten Ende am Emitter des Transistors T1. Da die Emitterspannung des Transistors T1 höher (positiver ist) als die Basisspannung, fließt Strom über die Basis-Emitter-Strecke des Transistors T1. Dieser Strom lädt den Kondensator C sukzessive über den Widerstand R auf. Durch den Stromfluss beginnt der Flyback-Konverter zu arbeiten und erzeugt am Ausgang der Niedervolt-Einheit eine Niedervoltspannung. Diese wird einem aus zwei Widerständen 40, 41 gebildeten Spannungsteiler zugeführt, dessen Knotenpunkt mit der Basis des Transistors T2 verbunden ist. Die Folge davon ist, dass der Transistor T2 den Ladezustand des Kondensators C unterbricht. Außerdem wird der Transistor T1 leitend und übernimmt nun über die Basis-Kollektorstrecke die Stromversorgung der Niedervolt-Einheit 10. Wenn der Netzschalter 32 wieder geöffnet wird, so stellt sich der Ausgangszustand wieder ein. Wesentlich ist, dass der Start-Schaltungsteil 47 einen Netzstart ermöglicht hat.

Als nächstes sei angenommen, dass der Schnittstelle 11 vom Bus ein externer Ausschaltbefehl übermittelt wird. Dieser wird von dem potentialgetrennten Koppelglied 12 aufgenommen und an den IC 9 weitergeleitet. Der IC 9 öffnet daraufhin den Schalter S im Start-Schaltungsteil 47. Dadurch wird die Spannung von dem Spannungsteiler 40, 41 genommen, mit der Folge, dass der Transistor nichtleitend wird und dass dann auch der Transistor T1 nichtleitend geschaltet wird. Es kann jedoch über die Emitter-Basis-Strecke des Transistors T1 ein Strom fließen, der zur Aufladung des Kondensators C führt. Wenn der Kondensator C sich auf die Zwischenkreisspannung am Schaltungspunkt 6 aufgeladen hat, hört der Stromfluss auf, mit der Folge, dass die Niedervolt-Einheit 10 abgeschaltet wird. Der von dem potentialgetrennten Koppelglied 12 an den IC 9 übermittelte externe Ausschaltbefehl wird von dem IC 9 ferner dahingehend umgesetzt, dass er alle Strom verbrauchenden Schaltungsteile des Betriebsgerätes ausschaltet. Das Betriebsgerät befindet sich dann im Standby-Zustand und verbraucht keine Energie.

Als nächstes sei angenommen, dass der Schnittstelle 11 externe Energie zugeführt wird. Dabei sei vorausgesetzt, dass der AC/DC-Wandler 5 über den geschlossenen Netzschalter 32 am Netz 4 liegt, selbst jedoch keine Energie verbraucht. Ferner ist Voraussetzung, dass der Schalter S in dem Start-Schaltungsteil 47 offen ist (er wurde - wie zuvor beschrieben - vom IC 9 mit dem Empfang des externen Ausschaltbefehles geöffnet. Der Kondensator C ist noch mit der Zwischenkreis-Spannung aufgeladen. Durch das externe Energiesignal erzeugt die Anlaufschaltung 13 in der Schnittstelle 11 eine Niedervoltspannung, die den Transistor T2 (zumindest kurzfristig) leitend macht, mit der Folge, dass der Kondensator C entladen wird. Daraufhin beginnt durch den Schaltregler-IC 33 wieder Strom über die Emitter-Basis-Strecke des Transistors T1 zu fließen, der erneut dazu führt, dass der Kondensator C sich aufzuladen beginnt. Auf diese Weise erzeugt die Niedervolt-Einheit 10 wieder eine Niedervoltspannung, die den IC 9 in Funktion setzt, worauf dieser den Schalter S wieder schließt. Damit ist das Betriebsgerät wieder eingeschaltet.

Die Anlaufzeit der Niedervolt-Einheit t_{NE} ist wesentlich größer ist als 5τ, wobei τ das Produkt C·R ist. Das bedeutet, dass die Ladung und die Endladung des Kondensators C sehr viel schneller erfolgen als das Anlaufen der Niedervolt-Einheit 10. Die Schaltung nach Fig. 7 enthält eine galvanische Trennung des Schaltregler ICs 33 gegenüber dem IC 9.

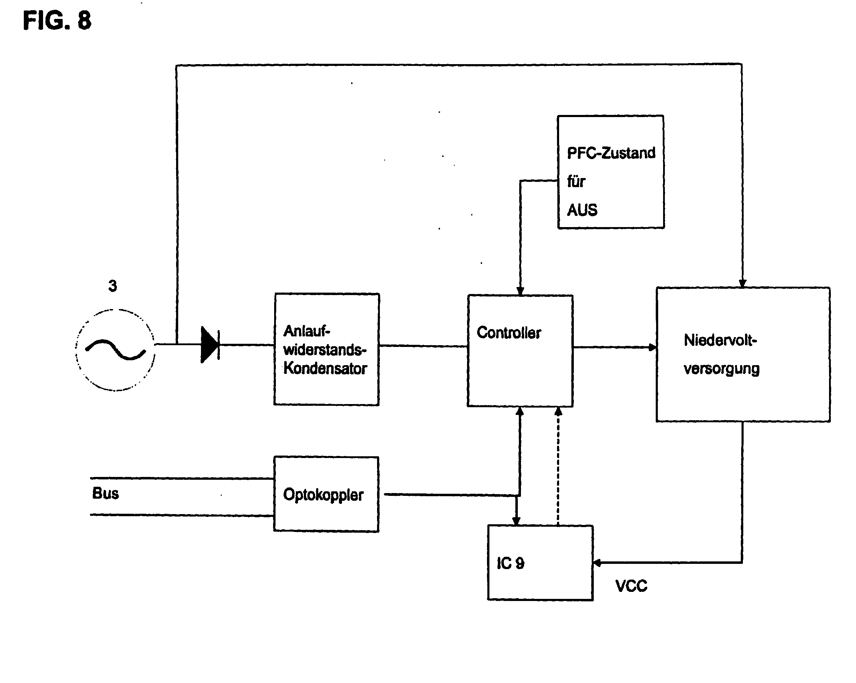

In Fig. 8 ist eine ähnliche Schaltung wie in Fig. 7 gezeigt. Sie unterscheidet sich jedoch von der in Fig. 7 gezeigten Schaltung dadurch, dass hier keine galvanische Trennung zwischen der Niedervolt-Einheit 10 und dem IC 9 gegeben ist. Die Niedervolt-Einheit arbeitet mit einem Schaltregler 41, der als Tiefsetzsteller (Buck-Konverter) ausgeführt ist. Zu dem Buck-Konverter gehören zwei Dioden 42 und 46, zwei Kondensatoren 43 und 45 sowie eine Induktivität 44. Der für einen Buck-Konverter unentbehrliche Schalter ist Teil eines ICs.

Ansonsten ist die Funktion der Schaltung nach Fig. 8 analog zu derjenigen gemäß Fig. 7. Auf eine weitere detaillierte Beschreibung wird daher verzichtet.

Die Ansteuerung des Start-Schaltungsteils 47 und der Niedervolt-Einheit 10 kann in den IC 9 integriert werden und es kann zumindest ein Teil der Schaltung des Start-Schaltungsteils 47 und der Niedervolt-Einheit 10 auch in den IC 9 integriert werden. Durch die Fähigkeit des ICs 9, zumindest einige seiner Funktionsblöcke abzuschalten oder in ihrer Funktionalität zu reduzieren, kann somit ein sehr effizienter Standby-Betrieb und Wiederhochlauf aus diesem ermöglicht werden.

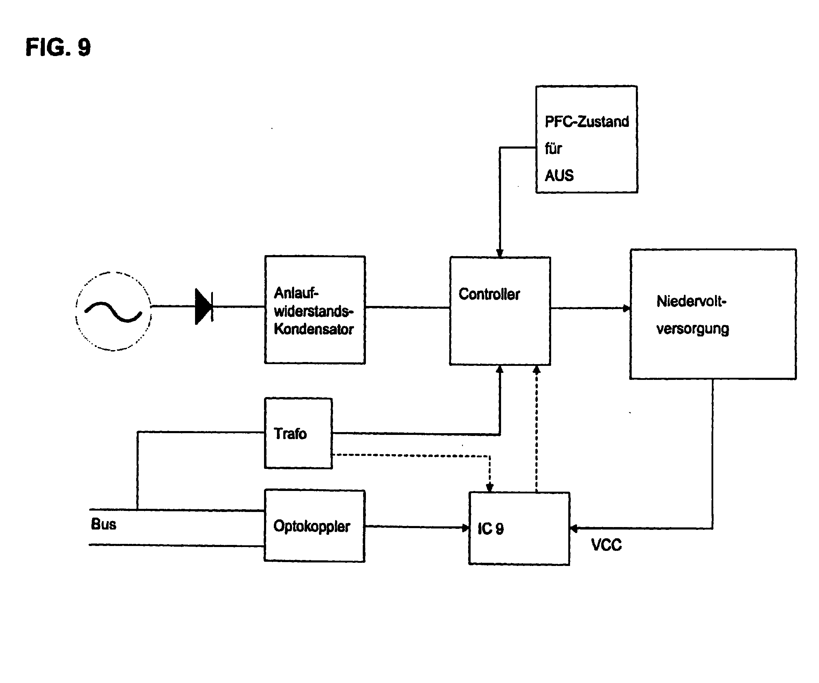

Unter Bezugnahme auf Figuren 8 und 9 sollen nunmehr weitere Ausführungsbeispiele der Erfindung erläutert werden.

In Figuren 8 und 9 ist jeweils nur ein Ausschnitt aus einem Betriebsgerät für Leuchtmittel gezeigt, nämlich der Ausschnitt, der für die Niedervoltversorgung der integrierten Schaltung 9 notwendig ist.

In Figur 8 ist wiederum eine Signalleitung, wie beispielsweise ein Bus schematisch dargestellt. Die Signale werden galvanisch getrennt, vorzugsweise über einen Optokoppler oder einen Transformator und einem Signaleingang der integrierten Schaltung 9 zugeführt. Wie oben bereits erläutert, steuert die integrierte Schaltung 9, wenn sie angelaufen ist, den Betrieb der angeschlossenen Leuchtmittel. Dazu kann sie Schaltelemente im Bereich der aktiv getakteten PFC-Schaltung, einen DC/AC-Wandler, der ausgehend von der Zwischenkreisspannung die Leuchtmittel versorgt (beispielsweise einen Halbbrücken- oder Vollbrückenwechselrichter) oder auch Elemente im Lastkreis selbst (beispielsweise eine Heizschaltung für Wendeln von Gasentladungslampen). Der integrierten Schaltung 9 sind wie üblich auch Rückführgrößen aus dem Bereich der Versorgungsspannung (Netzspannung oder Batteriespannung) dem Bereich der Zwischenkreisschaltung (PFC), dem Bereich der Zwischenkreisspannung sowie dem DC/AC-Konverter sowie dem Lastkreis und den Leuchtmitteln selbst zuführbar.

In dem Ausführungsbeispiel von Figur 8 ist eine Aufweckschaltung in Form eines Controllers vorgesehen, die einen Aufweckeingang (Wake up) aufweist, der über dieselbe galvanische Trennung wie der IC9 oder aber über eine separate zugeführte galvanische Trennung ebenfalls Signale in der Busleitung erhält. Insbesondere sind diese Signale derart ausgebildet, dass sie der Aufweckschaltung über den Aufweckeingang mitteilen, dass eine Aktivität auf der Busleitung bzw. Signalleitung stattfindet. Bei dem Beispiel eines DALI-Busses kann diese Aktivität insbesondere darin bestehen, dass ausgehend von dem Ruhezustand (der beim DALI-Standard logisch 'hoch' ist) eine fallende Flanke detektiert ist. Wenn an dem Aufweckeingang der Aufweckschaltung (Kleincontroller) ein derartiges Aufwecksignal eingeht, wird die Aufweckschaltung aktiv geschaltet. Dabei kann die Aufweckschaltung wie in Figur 8 schematisch gezeigt auch ausgehend von einer Versorgungsspannung, wie beispielsweise der Netzspannung oder der Batteriespannung (beispielsweise bei einem Notlichtgerät) mittels einer Anlaufschaltung mit Standby-Energie versorgt werden. Die Anlaufschaltung kann beispielsweise, wie für sich selbst genommen aus dem Stand der Technik gut bekannt, aus einem hochohmigen Anlaufwiderstand bestehen, der von der Versorgungsspannung gespeist wird und über den beispielsweise ein Speicherelement wie ein Kondensator geladen ist. Die Kondensatorspannung dient dann zur Bereitstellung der Standby-Energie für die Aufweckschaltung. Das Aufwecksignal kann aber auch ein spezieller Befehl des Bus-Systems sein.

Bei der Aufweckschaltung (Klein Controller) kann es sich um einen Microcontroller, einen Schaltnetzeil-Regel-IC oder auch um einen speziellen IC für den Stand-by Betrieb handeln.

Bspw. kann die Aufweckschaltung implementiert werden durch einen Kleincontroller des der Serie PIC10F200/202/204/206 der Firma Microchip. Dabei handelt es sich um einen low cost Microcontroller, der einen sehr energie-effizienten Stromsparmodus hat.

Es ist aber auch denkbar, einen spezifischen Stand-by IC zu verwenden, der genau auf diese Anwendung hin entwickelt ist und u.a. ein Stand-by Signal oder auch nur Signalisierung in Form eines Impulses o.ä. emfangen kann und einen Schaltvorgang einleiten können; dies bei sehr niedriger Energieaufnahme im Stand-by).

Die Aufweckschaltung, versorgt diese elektrische Standby-Energie von der Anlaufschaltung, ausgelöst durch das Aufwecksignal am Aufweckeingang mit der Aufweckschaltung, schaltet dann die Niedervoltversorgungseinheit ein. Das Einschalten der Niedervoltversorgungseinheit kann beispielsweise dadurch ausgeführt werden, dass die Niedervoltversorgung durch die Aufweckschaltung mit der Zwischenkreisspannung versorgt ist. Es kommt also somit zum Aktivieren der Niedervolteinheit, so dass diese eine Versorgungsspannung V_{cc} für die integrierte Schaltung 9 erzeugen kann.

Die Aufweckschaltung kann selektiv in einen Sleep-Modus versetzt werden, in dem sie nur sehr wenig elektrische Energie verbraucht und im Wesentlichen nur ihren Aufweckeingang überwacht. Bevor die Aufweckschaltung in den Ruhezustand (Sleep-Mode) übergeht, schaltet sie noch die selektiv abschaltbare Niedervolteinheit ab und trennt sie dazu beispielsweise von der Zwischenkreisspannung.

Vorzugsweise wird die Aufweckschaltung in den Ruhezustand versetzt, sobald, beispielsweise vorgegeben durch externe eingehende Befehle von der Busleitung, die durch die integrierte Schaltung 9 betriebenen Leuchtmittel abgeschaltet werden. Eine Möglichkeit ist dabei, dass die Aufweckschaltung ein entsprechendes Signal von der integrierten Schaltung 9 an einem Abschalteingang erhält. Dieses Signal kann beispielsweise das Signal sein, bzw. zeitgleich zu dem Signal sein, mit dem die integrierte Schaltung IC 9 eine aktiv getaktete PFC-Schaltung abschaltet.

Indessen kann das Signal für den Abschalteingang der Aufweckschaltung auch an anderen Bereichen des Betriebsgeräts abgegriffen werden, beispielsweise kann dieses Signal direkt von dem Steuereingang des Schalters der aktiv getakteten PFC-Schaltung abgegriffen werden.

In Figur 9 ist eine Abwandlung von Figur 8 dahingehend ausgeführt, dass die integrierte Schaltung IC9 und die Aufweckschaltung über jeweils separat vorgesehene galvanische Trennungen mit der Signalleitung (Busleitung) verbunden sind. Dabei kann es sich auch um unterschiedliche galvanische Trennung, bspw. je einem von Transformator und Optokoppler handeln. In dem dargestellten Beispiel von Figur 9 ist der IC 9 über einen Optokoppler mit der Busleitung verbunden, während bereits in den Figuren 3 und 5 die Aufweckschaltung mittels eines Transformators mit der Busleitung verbunden ist. Somit kann die Aufweckschaltung auch Energie ausgehend von der Busleitung zugeführt werden.

Der hochohmige Anlaufwiderstand in der Anlaufschaltung von Figur 8 und Figur kann derart dimensioniert sein, dass er bei Anliegen der Spannungsversorgung, beispielsweise der Netzspannung, einen Stromfluss von 100 bis 300, vorzugsweise im Bereich von 200nA erzeugt. Vorzugsweise wird auch bei der Ausführungsform von Figur 8 und 9 vor einer eigentlichen Nutzdatenübertragung beispielsweise über den DALI-Bus zuerst wenigstens ein Impuls oder ein Impulszug, vorzugsweise in einer Zeitdauer von 10ms gesendet, um die Aufweckschaltung aufzuwecken, um dann eine Signalverarbeitung durch den IC 9 zu gewährleisten. Vorzugsweise kann diese Art von Weckimpulsen auch dadurch erzielt werden, dass die zuerst gesendeten Daten doppelt gesendet werden, wobei dann die erste Hälfte zum Aufwecken der Schaltung und ggf. zur Energieerzeugung verwendet wird, während die zweite Hälfte dann korrekt als Signal durch den IC 9 verarbeitet wird. Es kann aber auch die Nutzdatenübertragung selbst zur Erzeugung der Stand-by Energie genutzt werden, beispielsweise durch Einsatz eines selbstschwingenden Transformators oder einen Optokoppler mit Fotovoltaik-Zelle (beispielsweise ein Fotovoltaik-Treiber).

In den Figuren 8 und 9 ist schematisch dargestellt, dass die Standby-Energie für die Aufweckschaltung (Kleincontroller) ausgehend von einer Versorgungsspannunggespeisten Anlaufschaltung erzeugt wird. Indessen kann diese Energie auch der Busleitung entnommen werden, indem die Aufweckschaltung über den dargestellten Transformator (Figur 9) oder auch über einen Optokoppler mit Fotovoltaik-Zelle (beispielsweise ein Fotovoltaik-Treiber) mit der Busleitung verbunden ist.

Bei Einsatz eines Transformators (beispielsweise eines selbstschwingenden Transformators) kann auch die Datenübertragung über den Transformator erfolgen, es kann in diesem Fall also auf den Optokoppler verzichtet werden, da der Transformator Energie und Daten übertragen würde. Der selbstschwingende Transformator könnte beispielsweise von einer einfachen Kippschaltung (Taktgenerator) oder durch einen Schaltregler IC getaktet werden. Die Ansteuerung des selbstschwingenden Transformators über die Kippschaltung (Taktgenerator) oder einen Schaltregler-IC kann bspw. immer dann erfolgen, wenn eine positive bzw. von Null verschiedene Spannung an der Busleitung anliegt.

## Patentansprüche

1. Betriebsgerät für Leuchtmittel, aufweisend:
- eine Steuereinheit, die die Versorgung der Leuchtmittel mit elektrischer Energie steuert,
- wobei die Steuereinheit eine integrierte Steuerschaltung (9) aufweist,
- eine Niedervolt-Einheit, die zumindest die integrierte Schaltung mit Niedervoltspannung versorgt, und
- eine Schnittstelle, über die der integrierten Steuerschaltung über eine Busleitung externe Steuersignale für den Betrieb der Leuchtmittel zuführbar sind,
wobei das Betriebsgerät dazu ausgebildet ist, in einer Anlaufphase ausgehend von der wenigstens einen Busleitung entnommenen elektrische Energie die Spannungsversorgung der integrierte Schaltung (9) zu starten,
wobei eine mit der Schnittstelle (11) verbundene oder in diese integrierte Anlaufschaltung (13) vorgesehen ist, der die externe Energie zugeführt wird und die daraus eine Niedervoltspannung generiert, welche der integrierten Schaltung direkt während der Anlaufphase der Niedervolt-Einheit (10) zugeführt wird.

2. Betriebsgerät nach Anspruch 1,
**dadurch gekennzeichnet,**
**dass** dem oder einem Eingang der Schnittstelle (11) Spannungsimpulse zugeführt werden, und dass die Anlaufschaltung (13) ein reaktives Bauelement vorzugsweise in der Form eines Transformators (26,27) oder Kondensators, aufweist, welches es erlaubt, die mit den Pulsen übertragene Energie aufzunehmen und zur Umwandlung in eine Niedervoltspannung weiterzuverarbeiten.

3. Betriebsgerät nach Anspruch 2,
**dadurch gekennzeichnet,**
**dass** die Schnittstelle (13) zur Aufnahme von Impulsen aus einem Bus (14) mit diesem verbunden ist.

4. Betriebsgerät nach Anspruch 3,
**dadurch gekennzeichnet,**
**dass** die Schnittstelle (11) beziehungsweise die Anlaufschaltung (13) so ausgelegt ist, dass sie über den Bus (14) Signale aufnehmen kann, und ferner dass sie vor den Steuerimpulsen gesendete Weckimpulse aufnehmen kann.

5. Betriebsgerät nach Anspruch 4,
**dadurch gekennzeichnet,**
**dass** die Schnittstelle (11) beziehungsweise die Anlaufschaltung (13) weiterhin so ausgelegt ist, dass sie als Pulsblock übertragene Weckimpulse aufnehmen kann

6. Betriebsgerät nach einem der Ansprüche 3 bis 5,
**dadurch gekennzeichnet,**
**dass** das Betriebsgerät so ausgelegt ist, dass es selbständig feststellt, ob es mit einem Dimm-Befehl ausgeschalten wurde, damit es nach einem Aufwecken auf den nächsten Dimm-Befehl für einen Start wartet und nicht einen normalen Netzstart ausführt.

7. Betriebsgerät nach Anspruch 1,
**dadurch gekennzeichnet,**
**dass** die Schnittstelle (11) zur Entgegennahme von über einen Taster oder Schalter erzeugten Netzspannungssignalen ausgebildet ist.

8. Betriebsgerät nach Anspruch 7,
**dadurch gekennzeichnet,**
**dass** die Anlaufschaltung (13) einen Begrenzungswiderstand (18), einen Gleichrichter (19, 23) mit Glättungselement (20) und ein Spannungsbegrenzungselement (22) enthält, und dass die aus Netzwellen bestehenden Taster- oder Schaltersignale direkt, d.h. ohne galvanische Sperre, zur Erzeugung der Anlaufenergie für die Niedervolt-Einheit (10) verwendet werden.

9. Betriebsgerät nach einem der vorhergehenden Ansprüche,
**dadurch gekennzeichnet,**
**dass** ein Startschaltungsteil (42) vorgesehen ist, der nach einem Standby-Zustand ohne Energie-Aufnahme einerseits einem Netzteil und anderseits einem Start zulässt, der durch über die Schnittstelle (11) zugeführte externe Energie initiiert wird.

10. Betriebsgerät nach Anspruch 9,
**dadurch gekennzeichnet,**
**dass** der Startschaltungsteil (47) einen Schalter (S) zum Ein- und Ausschalten der Niedervolt-Einheit (10) aufweist, dass der Schalter (S) von dem IC (9) gesteuert ist, derart, dass dieser den Schalter (S) bei Eingang eines externen Ausschaltbefehls über die Schnittstelle (11) öffnet und die Niedervolt-Einheit (10) auf Energieaufnahme Null stellt, und den Schalter (S) bei Eingang eines externen Energie-Signals wieder schließt, so dass die Niedervolt-Einheit (10) wieder anlaufen kann.

11. Leuchte, aufweisend ein Leuchtmittel, vorzugsweise eine Gasentladungslampe, eine LED oder eine OLED, sowie ein Betriebsgerät nach einem der vorhergehenden Ansprüche.

12. Beleuchtungssystem,
aufweisend mehrere Leuchten, darunter wenigstens eine nach Anspruch 11, wobei die Leuchten vorzugsweise mittels eines Bussystems untereinander und/oder mit einer zentralen Steuereinheit verbunden sind.

13. Verfahren zum Betrieb von Betriebsgeräten für Leuchtmittel, die eine Schnittstelle aufweisen, mittels der Steuersignale für den Betrieb der Leuchtmittel dem Betriebsgerät zugeführt werden, wobei
- das Betriebsgerät einschließlich einer Niedervolt-Einheit zum Betrieb eines ICs in einem Standby-Zustand versetzt werden kann, indem es keine elektrische Standby-Verluste erzeugt, und an der Schnittstelle auftretende externe Energiesignale aufgenommen und zum Anlauf der Niedervolt-Einheit oder direkt zum Anlauf des ICs verwendet werden.

14. Verfahren nach Anspruch 13,
bei dem die externen Energiesignale eine Anlaufschaltung aktiviert.

15. Verfahren nach Anspruch 13 oder 14,
bei dem die Energiesignale an der Schnittstelle zeitgleich mit den Steuersignalen aufgenommen werden.

16. Verfahren nach einem der Ansprüche 13 bis 15,
bei dem die Schnittstelle über einen Taster oder Schalter selektiv mit einer externen Spannungsquelle, insbesondere Netzspannung verbunden wird.

17. Verfahren nach einem der Ansprüche 13 bis 16,
bei dem die Energiesignale kurz vor dem Eingang von Steuersignalen von der Schnittstelle aufgenommen werden.

18. Verfahren nach Anspruch 17,
bei dem die Energiesignale aufgenommene Impulse sind, die über einen Transformator aufgenommen werden.

19. Verfahren nach Anspruch 17,
bei dem die Impulse in dem Betriebsgerät, insbesondere der Schnittstelle, auf Grundlage einer an der Schnittstelle anliegenden Spannung erzeugt werden, insbesondere mittels eines Taktgenerators, insbesondere einer Flip-Flop-Schaltung Spannung erzeugt werden.

20. Verfahren einem der Ansprüchen 18 oder 19,
bei dem die Schnittstelle bei Anliegen einer Wechselspannung nur denjenigen Anteil der Wechselspannung verwertet, dessen Wert oder Absolutwert über einem vorgegebenen Schwellenwert liegt.

21. Verfahren nach einem der Ansprüche 13 und 20,
bei der die Schnittstelle eine mit einer externen Steuerleitung verbundene Primärseite und eine davon potentialgetrennte Sekundärseite aufweist, die mit dem IC des Betriebsgeräts verbunden ist.

## Claims

1. Operating device for illuminating means, having:
- a control unit which controls the supply of electrical energy to the illuminating means,
- the control unit having an integrated control circuit (9),
- a low-voltage unit which supplies low voltage to at least the integrated circuit, and
- an interface which can be used to supply the integrated control circuit with external control signals for operating the illuminating means via a bus line,
the operating device being designed to start the voltage supply for the integrated circuit (9) in a start-up phase starting from electrical energy taken from the at least one bus line,
**characterized in that**
a start-up circuit (13) which is connected to the interface (11) or is integrated in the latter is provided, which circuit is supplied with the external energy and uses the latter to generate a low voltage which is directly supplied to the integrated circuit during the start-up phase of the low-voltage unit (10).

2. Operating device according to Claim 1,
**characterized in that**
voltage pulses are supplied to the input or to one input of the interface (11), and **in that** the start-up circuit (13) has a reactive component, preferably in the form of a transformer (26, 27) or capacitor, which allows the energy transmitted with the pulses to be received and to be processed further for conversion to a low voltage.

3. Operating device according to Claim 2,
**characterized in that**
the interface (13) is connected to a bus (14) in order to receive pulses from the latter.

4. Operating device according to Claim 3,
**characterized in that**
the interface (11) or the start-up circuit (13) is designed in such a manner that it can receive signals via the bus (14) and also in such a manner that it can receive wake-up pulses transmitted before the control pulses.

5. Operating device according to Claim 4,
**characterized in that**
the interface (11) or the start-up circuit (13) is also designed in such a manner that it can receive wake-up pulses transmitted as a pulse block.

6. Operating device according to one of Claims 3 to 5,
**characterized in that**
the operating device is designed in such a manner that it independently determines whether it was switched off with a dimming command so that, after waking up, it waits for the next dimming command for a start and does not carry out a normal mains start.

7. Operating device according to Claim 1,
**characterized in that**
the interface (11) is designed to receive mains voltage signals generated via a push-button or switch.

8. Operating device according to Claim 7,
**characterized in that**
the start-up circuit (13) contains a limiting resistor (18), a rectifier (19, 23) with a smoothing element (20) and a voltage limiting element (22), and **in that** the push-button or switch signals consisting of mains cycles are used directly, that is to say without a galvanic barrier, to generate the start-up energy for the low-voltage unit (10).

9. Operating device according to one of the preceding claims,
**characterized in that**
a starting circuit part (47) is provided and, following a stand-by state without energy consumption, permits a power supply unit, on the one hand, and a start, on the other hand, which is initiated by external energy supplied via the interface (11).

10. Operating device according to Claim 9,
**characterized in that**
the starting circuit part (47) has a switch (S) for switching the low-voltage unit (10) on and off, and **in that** the switch (S) is controlled by the IC (9) in such a manner that the latter opens the switch (S) upon the receipt of an external switch-off command via the interface (11) and sets the low-voltage unit (10) to zero energy consumption and closes the switch (S) again upon the receipt of an external energy signal, with the result that the low-voltage unit (10) can start up again.

11. Lamp having an illuminating means, preferably a gas discharge lamp, an LED or an OLED, and an operating device according to one of the preceding claims.

12. Lighting system
having a plurality of lamps, including at least one lamp according to Claim 11, the lamps preferably being connected to one another and/or to a central control unit by means of a bus system.

13. Method for operating operating devices for illuminating means having an interface which is used to supply the operating device with control signals for operating the illuminating means,
- the operating device, including a low-voltage unit for operating an IC, being able to be changed to a stand-by state in which it does not generate any electrical stand-by losses, **characterized in that** external energy signals which occur are received at the interface and are used to start up the low-voltage unit or are used directly to start up the IC.

14. Method according to Claim 13,
in which the external energy signals activate a start-up circuit.

15. Method according to Claim 13 or 14,
in which the energy signals are received at the interface at the same time as the control signals.

16. Method according to one of Claims 13 to 15,
in which the interface is selectively connected to an external voltage source, in particular a mains voltage, via a push-button or switch.

17. Method according to one of Claims 13 to 16,
in which the energy signals are received by the interface shortly before the receipt of control signals.

18. Method according to Claim 17,
in which the energy signals are received pulses which are received via a transformer.

19. Method according to Claim 17,
in which the pulses are generated in the operating device, in particular the interface, on the basis of a voltage applied to the interface, in particular by means of a clock generator, in particular a flip-flop circuit voltage.

20. Method according to either of Claims 18 and 19,
in which, when an AC voltage is applied, the interface uses only that component of the AC voltage whose value or absolute value is above a predefined threshold value.

21. Method according to either of Claims 13 and 20,
in which the interface has a primary side, which is connected to an external control line, and a secondary side which is isolated, in terms of potential, from the primary side and is connected to the IC of the operating device.

## Revendications

1. Appareil d'alimentation pour un ou des moyens d'éclairage, comprenant :
- une unité de commande, qui commande l'alimentation des moyens d'éclairage en énergie électrique,
- l'unité de commande présentant un circuit intégré de commande (9),
- une unité de basse tension, qui alimente au moins le circuit intégré en basse tension, et
- une interface, par laquelle des signaux de commande externes pour le fonctionnement des moyens d'éclairage sont susceptibles d'être fournis au circuit intégré de commande via une ligne de bus,
l'appareil d'alimentation étant arrangé pour, dans une phase de démarrage, démarrer l'alimentation en tension du circuit intégré (9) à partir de l'énergie électrique prélevée à ladite au moins une ligne de bus, **caractérisé en ce que**
il est prévu un circuit de démarrage (13) relié à l'interface (11) ou intégré à celle-ci est prévu, auquel est fournie l'énergie externe et lequel génère à partir de celle-ci une basse tension, laquelle est fournie au circuit intégré directement pendant la phase de démarrage de l'unité de basse tension (10).

2. Appareil d'alimentation selon la revendication 1,
**caractérisé en ce que**
des impulsions de tension sont fournies à l'entrée ou à une entrée de l'interface (11), et **en ce que** le circuit de démarrage (13) présente un composant réactif, de préférence de la forme d'un transformateur (26, 27) ou d'un condensateur, qui permet de recevoir ou absorber l'énergie transmise avec les impulsions et de la traiter pour la convertir en une basse tension.

3. Appareil d'alimentation selon la revendication 2,
**caractérisé en ce que**
l'interface (13) pour la réception d'impulsions provenant d'un bus (14) est reliée à celui-ci.

4. Appareil d'alimentation selon la revendication 3,
**caractérisé en ce que**
l'interface (11) ou le circuit de démarrage (13) est conçu de sorte qu'il ou elle peut réceptionner des signaux via le bus (14), et **en ce qu'**il ou elle peut en outre réceptionner des impulsions de réveil transmises avant les impulsions de commande.

5. Appareil d'alimentation selon la revendication 4,
**caractérisé en ce que** l'interface (11) ou le circuit de démarrage (13) est conçu en outre de sorte qu'il ou elle peut réceptionner des impulsions de réveil transmis en bloc d'impulsions.

6. Appareil d'alimentation selon l'une des revendications 3 à 5,
**caractérisé en ce que** l'appareil d'alimentation est conçu de sorte qu'il détermine de façon indépendante s'il a été éteint avec une commande de gradation, de sorte que, après un réveil, il attend la prochaine commande de gradation pour un démarrage et n'effectue pas un démarrage normal de réseau.

7. Appareil d'alimentation selon la revendication 1,
**caractérisé en ce que** l'interface (11) est conçue pour la réception de signaux de tension de réseau générés via un bouton poussoir ou un commutateur.

8. Appareil d'alimentation selon la revendication 7,
**caractérisé en ce que** le circuit de démarrage (13) comprend une résistance de limitation (18), un circuit redresseur (19, 23) avec un élément de lissage (20) et un élément de limitation de tension (22), et **en ce que** les signaux de bouton poussoir ou de commutateur composés d'ondes de réseau sont utilisés directement, c'est-à-dire sans barrière galvanique, pour générer l'énergie de démarrage pour l'unité de basse tension (10).

9. Appareil d'alimentation selon l'une des revendications précédentes,
**caractérisé en ce qu'**il est prévu une partie de circuit de démarrage (42), qui permet
après un état de veille sans absorption d'énergie d'une part un composant de réseau et d'autre part un démarrage, qui est initié par de l'énergie externe fournie via l'interface (11).

10. Appareil d'alimentation selon la revendication 9,
**caractérisé en ce que**
la partie de circuit de démarrage (47) présente un commutateur (S) pour allumer et éteindre l'unité de basse tension (10), **en ce que** le commutateur (S) est commandé par le circuit intégré (9) de manière à ce que celui-ci ouvre le commutateur (S) lors de l'entrée d'une instruction externe de mise hors marche via l'interface (11) et règle l'unité de basse tension (10) sur une absorption d'énergie nulle, et ferme à nouveau le commutateur (S) lors de l'entrée d'un signal externe d'énergie de sorte que l'unité de basse tension (10) peut à nouveau démarrer.

11. Lampe, présentant un moyen d'éclairage, de préférence une lampe à décharge de gaz, une LED ou une OLED, ainsi qu'un appareil d'alimentation selon l'une des revendications précédentes.

12. Système d'éclairage,
présentant plusieurs lampes, dont au moins une lampe selon la revendication 11, dans lequel les lampes sont reliées entre elles et /ou avec une unité centrale de commande de préférence au moyen d'un système de bus.

13. Procédé pour le fonctionnement d'appareils d'alimentation pour un ou des moyens d'éclairage, qui présentent une interface au moyen de laquelle des signaux de commande pour le fonctionnement des moyens d'éclairage sont fournis à l'appareil d'alimentation,
dans lequel
- l'appareil d'alimentation comprenant une unité de basse tension pour le fonctionnement d'un circuit intégré peut être mis dans un état de veille, dans lequel il ne génère pas de perte électrique en veille, **caractérisé en ce que** des signaux externes d'énergie apparaissant à l'interface sont réceptionnés et utilisés pour le démarrage de l'unité de basse tension ou utilisés directement pour le démarrage du circuit intégré.

14. Procédé selon la revendication 13,
dans lequel les signaux externes d'énergie activent un circuit de démarrage.

15. Procédé selon la revendication 13 ou 14
dans lequel les signaux d'énergie sont réceptionnés à l'interface en même temps que les signaux de commande.

16. Procédé selon l'une des revendications 13 à 15,
dans lequel l'interface est reliée sélectivement avec une source externe de tension, en particulier une tension de réseau, via un bouton poussoir ou un commutateur.

17. Procédé selon l'une des revendications 13 à 16,
dans lequel les signaux d'énergie sont réceptionnés par l'interface peu de temps avant l'entrée de signaux de commande.

18. Procédé selon la revendication 17,
dans lequel les signaux d'énergie sont des impulsions réceptionnées, qui sont réceptionnées via un transformateur.

19. Procédé selon la revendication 17,
dans lequel les impulsions sont générées dans l'appareil d'alimentation, en particulier dans l'interface, sur la base d'une tension aux bornes de l'interface, en particulier au moyen d'un générateur de cycles, en particulier d'une tension de un circuit à bascule.

20. Procédé selon l'une des revendications 18 ou 19,
dans lequel, lors de l'application d'une tension alternative, l'interface n'utilise que la partie de la tension alternative dont la valeur ou la valeur absolue se trouve au-dessus d'une limite prédéfinie.

21. Procédé selon l'une des revendications 13 à 20,
dans lequel l'interface présente un côté primaire, qui est relié à un branchement externe de commande, et un côté secondaire isolé électriquement du côté primaire, lequel côté secondaire est relié au circuit intégré de l'appareil d'alimentation.
